(19)

Europäisches
Patentamt
European
Patent Office
Office européen
des brevets

(11) **EP 2 243 942 B1**

(12) **EUROPEAN PATENT SPECIFICATION**

(45) Date of publication and mention
of the grant of the patent:
**27.07.2016  Bulletin 2016/30**

(51) Int Cl.:
***F02D 41/00*** *(2006.01)*

(21) Application number: **10160638.2**

(22) Date of filing: **21.04.2010**

(54) **Balancing method for the cylinders of an internal combustion engine**

Verfahren zum Ausgleichen des Zylinders einer Brennkraftmaschine

Méthode d'équilibrage des cylindres d'un moteur à combustion interne

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **24.04.2009  IT BO20090256**

(43) Date of publication of application:
**27.10.2010  Bulletin 2010/43**

(73) Proprietor: **Magneti Marelli S.p.A.
20011 Corbetta (MI) (IT)**

(72) Inventors:
• **Panciroli, Marco
  40100, BOLOGNA (IT)**
• **Alunni, Francesco
  06132, SAN SISTO (IT)**
• **Sgatti, Stefano
  40026, IMOLA (IT)**

(74) Representative: **Bergadano, Mirko et al
Studio Torta S.p.A.
Via Viotti, 9
10121 Torino (IT)**

(56) References cited:
**EP-A1- 1 342 903       EP-A1- 2 011 983
DE-A1- 10 332 350     US-A- 5 113 826
US-A- 5 146 888         US-A1- 2002 166 539**

**Description**

TECHNICAL FIELD

The present invention relates to a balancing method for the cylinders of an internal combustion engine.
The present invention is advantageously applied to the balancing of the cylinders of an internal combustion engine of a motor vehicle, to which explicit reference will be made in the following description without therefore loosing in generality.

PRIOR ART

In an internal combustion engine for a motor vehicle, there may be minor differences between cylinders due to inevitable constructional tolerances and due to different time drifts. Such differences between cylinders determine differences in the aspirated air amount in case of the opening of the butterfly valves being equal; and therefore, since the amount of injected petrol being the same for all cylinders, the combustion in at least one cylinder will always be either too lean (i.e. with an air-to-fuel ratio unbalanced in favor of air) or too rich (i.e. an air-to-fuel ratio unbalanced in favor of petrol). The problem of differences between cylinders is particularly felt in internal combustion engines for motorcycles, because in general these internal combustion engines have no intake manifold and each cylinder is directly connected to the air box (containing the air cleaner) by means of a short intake duct (or intake horn) adjusted by a respective butterfly valve.
For balancing the cylinders of an internal combustion engine for motorcycles, i.e. for compensating the minor differences between cylinders, each intake duct comprises a bypass duct which is arranged astride of the butterfly valve, i.e. it connects an area of the intake duct upstream of the butterfly valve to an area of the intake duct downstream of the butterfly valve. Each bypass duct is provided with a bypass valve, which is either opened or closed by operating on an adjustment screw. When an internal combustion engine for motorcycles is produced, the bypass valves are all closed and are then opened during a balancing procedure to compensate for the minor differences between cylinders.
Currently, the cylinders of the internal combustion engine for motorcycles are balanced in an entirely manual manner by an experienced operator who evaluates the unbalances between the cylinders "by ear" (i.e. by evaluating the noise of the engines at different engine speeds according to his/her experience) and using both vacuometers, which are connected to the intake ducts, and the signals provided by lambda sensors of the exhaust system. However, the entirely manual balancing of the cylinders is long and difficult, and especially requires the intervention of an experienced operator, who can correctly evaluate the unbalance signals supplied by vacuometers, lambda sensors and engine noise.
DE10332350A1 discloses an electronic engine control unit which adjusts individual inter-cylinder variations by inter-relation of instantaneous breathing, speed, stoichiometry, timing and injection. In particular, DE10332350A1 discloses a balancing method of the cylinders of an internal combustion engine according to the preamble of independent claim 1.

DESCRIPTION OF THE INVENTION

It is the object of the present invention to provide a balancing method of the cylinders of an internal combustion engine, which balancing method is free from the above-described drawbacks, while being easy and cost-effective to be implemented.
According to the present invention, a balancing method of the cylinders of an internal combustion engine is provided as claimed in the appended claims.

BRIEF DESCRIPTION OF THE DRAWINGS

The present invention will now be described with reference to the accompanying drawings, which illustrate a non-limitative embodiment thereof, in which:

- figure 1 is a diagrammatic view of an internal combustion engine which implements the balancing method object of the present invention;
- figure 2 is a diagrammatic view of a variant of the engine in figure 1; and
- figures 3 and 4 are two charts showing the variation of intake pressure in the engine in figure 2 as the engine angle (i.e. the angular position of the drive shaft) varies.

PREFERRED EMBODIMENTS OF THE INVENTION

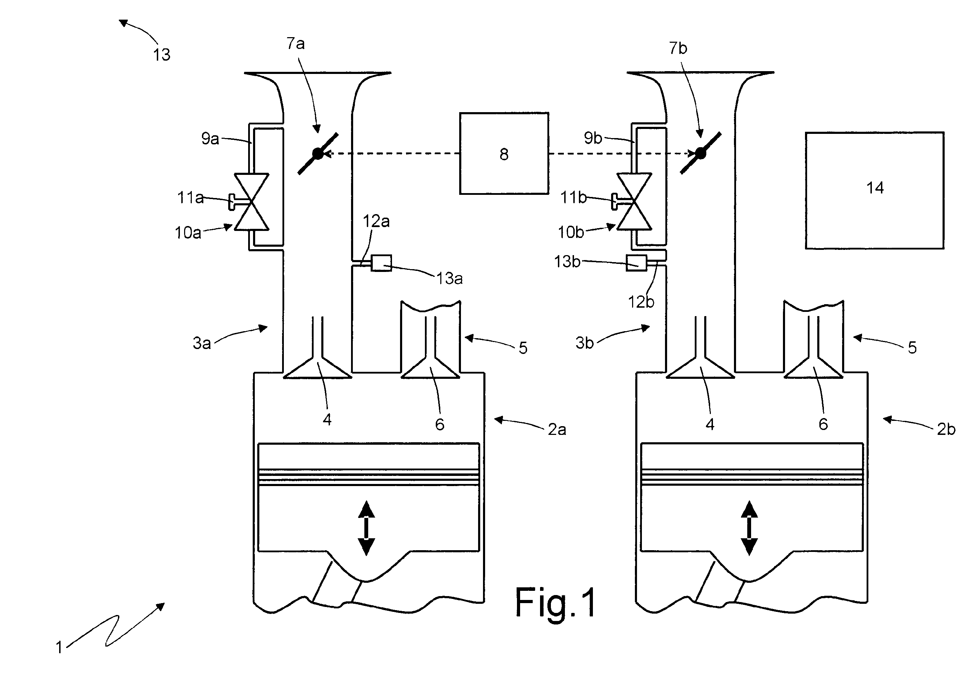

In figure 1, numeral 1 indicates as a whole an internal combustion engine for motor vehicles. The internal combustion engine 1 is provided with two cylinders 2, each of which is connected to a respective intake duct 3 (or intake horn) by means of two intake valves 4 (only one of which is shown in figure 1) and to an exhaust duct 5 by means of two exhaust valves 6 (only one of which is shown in figure 1). Each intake duct 3 originates from an air box (containing an air cleaner) for receiving fresh air (i.e. air from the external environment) and is adjusted by a butterfly valve 7. The two butterfly valves 7 are actuated by the same electric actuator 8, which is common to both butterfly valves 7.

Each intake duct 3 comprises a bypass duct 9, which is arranged astride of the butterfly valve 7, i.e. it connects an area of the intake duct upstream of the butterfly valve 7 to an area of the intake duct 3 downstream of the butterfly valve 7. Each bypass duct 9 is provided with a bypass valve 10, which is either opened or closed by operating on an adjustment screw 11.

A measuring duct 12 originates in each intake duct 3 downstream of the butterfly valve 7, which measuring duct 12 has a pressure port with a calibrated hole and is provided with a pressure sensor 13 adapted to measure the value of the intake pressure within the intake duct 3. Therefore, each pressure sensor 13 is associated to a corresponding intake duct 3 and detects an intake pressure value substantially equal to the pressure inside the intake duct downstream of the butterfly valve 7. The pressure port of each measuring duct 12 preferably originates as far as possible from the butterfly valve 7, thus as close as possible to the intake valves 4, where the shape and level of the pressure are more significant.

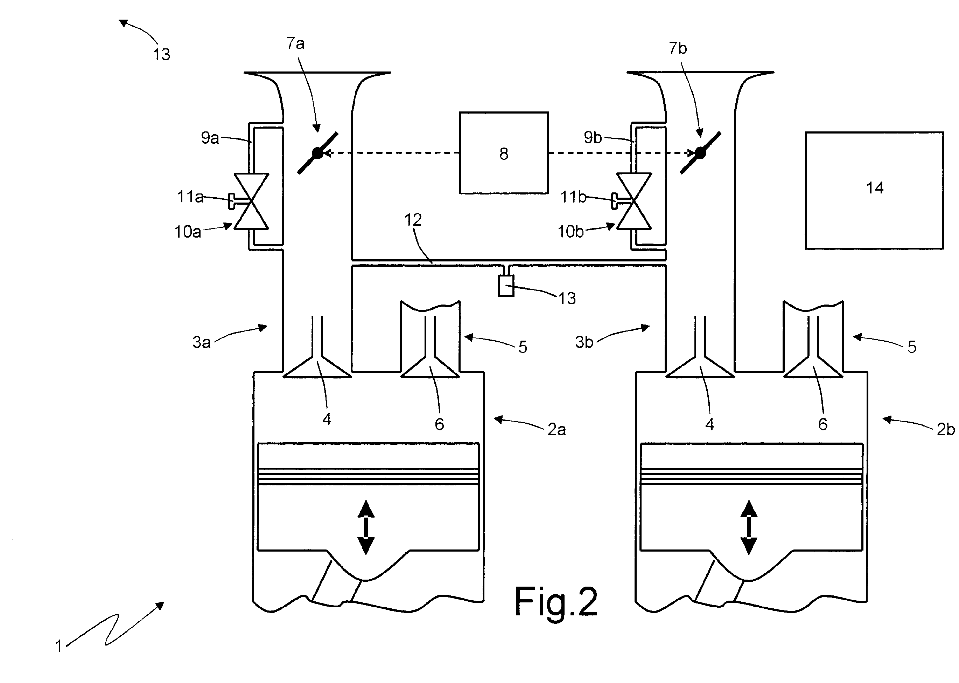

According to the alternative embodiment shown in figure 2, one common Y-shaped measuring duct 12 is included, which connects the two intake ducts 3 together and is provided with a pressure sensor 13 adapted to measure the pressure value inside the measuring duct 12. Therefore, the pressure sensor 13 is in common to both intake ducts 3 and detects an intake pressure value which is a combination of the pressures inside the intake ducts 3 downstream of the butterfly valves 7.

An electronic control unit 14 governs the operation of the internal combustion engine 1 and, inter alia, receives the measuring signal provided by the pressure sensors 13 (in the embodiment in figure 1) or by the pressure sensor 13 (in the embodiment shown in figure 2), and drives the electric actuator 8. The electronic control unit 14 preferably comprises a fast acquisition buffer, which receives the measurements provided either by the pressure sensors 13 (in the embodiment shown in figure 1) or by the pressure sensor 13 (in the embodiment shown in figure 2). In particular, saving the instantaneous intake pressures in the fast acquisition buffer of the electronic control unit 14 is directly controlled by the BIOS of the electronic control unit 14 without requiring specific software; in other words, the acquisition of the measurements in the fast acquisition buffer is directly managed by the low level software present in the BIOS without requiring a specific intervention by the CPU, managed by the high level software.

The mode used by the electronic control unit 14 to balance the two cylinders 2 is described below.

During a design phase, an investigation window Wa expressed in engine degrees and associated to the cylinder 2a and an investigation window Wb expressed in engine degrees and associated to the cylinder 2b are determined. Preferably, when the internal combustion engine 1 comprises a corresponding pressure sensor 13 for each intake duct 3 (embodiment shown in figure 1), each investigation window Wa and Wb coincides with the engine cycle, i.e. it has a width of 720°; in this case, the two investigation windows Wa and Wb perfectly overlap. When the internal combustion engine 1 comprises a single pressure sensor 13 pneumatically connected to both intake ducts 3 (embodiment shown in figure 2), each investigation window Wa and Wb covers a fraction of the engine cycle; preferably, in this case, the two investigation windows Wa and Wb do not overlap at all. When the internal combustion engine 1 comprises a single pressure sensor 13 pneumatically connected to both intake ducts 3 (embodiment shown in figure 2), the exact positioning and size of the investigation windows Wa e Wb are determined in an essentially experimental manner from the starting data, gradually improving them by means of targeted experimental tests (which may possibly be replaced by software model simulations).

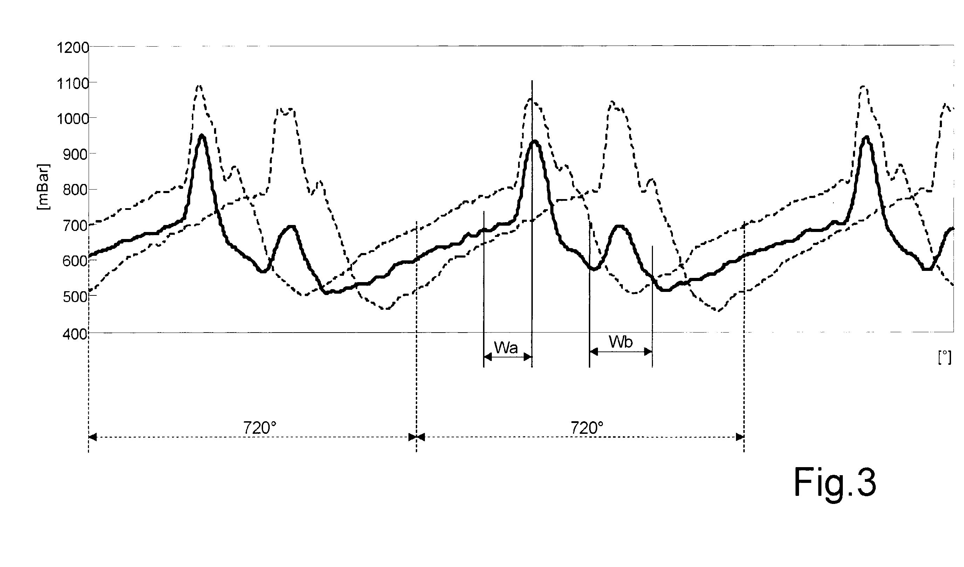

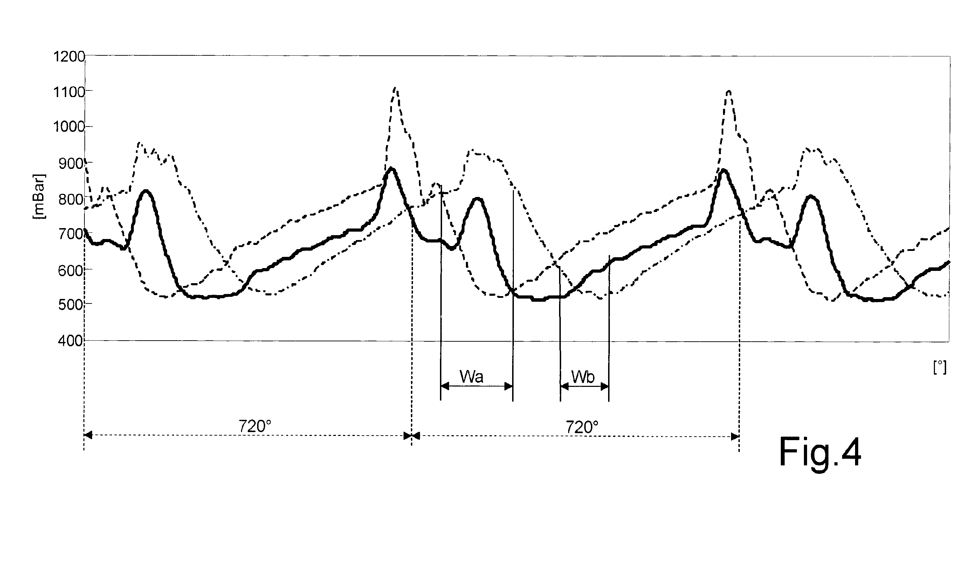

By way of example, figures 3 and 4 show two examples of acquisitions carried out on a real internal combustion engine 1 provided with a single pressure sensor pneumatically connected to two intake ducts 3. Figures 3 and 4 show investigation windows Wa and Wb; furthermore, in figures 3 and 4 the continuous line shows the pattern of the intake pressure measured by the common pressure sensor 13, while the dashed-and-dotted line shows the patterns of the intake pressure in the intake ducts 3 measured by further laboratory pressure sensors temporarily mounted for study purposes.

The internal combustion engine 1 is run at a desired and stabilized engine point which preferably includes rotation rpm close to idling rpm (indicatively about 2000 rpm) and a low opening degree of the butterfly values 7 (indicatively a few degrees of opening). When the engine point has stabilized, during an engine cycle the electronic control unit 14 samples the measurement of the instantaneous intake pressure provided by the pressure sensors 13 (in the embodiment in figure 1) or by the pressure sensor 13 (in the embodiment shown in figure 2).

At the end of each engine cycle occurring in the desired, stabilized engine point, the electronic control unit 14 determines a balance index Ia associated to the cylinder 2a by calculating an average of the instantaneous intake pressures within the investigation window Wa and determines a balance index Ib associated to the cylinder 2b by calculating an average of the instantaneous intake pressures within the investigation window Wb. When the internal combustion engine 1 comprises a corresponding pressure sensor 13 for each intake duct 3 (embodiment shown in figure 1), each balance index Ia and Ib is determined by calculating the average of the instantaneous intake pressures measured by the pressure sensor 13a or 13b coupled to the corresponding cylinder 2a or 2b; thus, each balance index Ia and Ib is equal to the average value of the intake pressure in the corresponding intake duct 3a and 3b during the corresponding investigation window Wa and Wb (i.e. during an entire engine cycle, because each investigation window Wa and Wb coincides with the engine cycle). When the internal combustion engine 1 comprises a single pressure sensor 13 pneumatically connected to both intake ducts 3 (embodiment shown in figure 2), each balance index Ia and Ib is equal to the average value of the intake pressure during the corresponding investigation window Wa and Wb, which is a fraction of the entire engine cycle.

According to a possible embodiment, each balance index Ia and Ib is calculated by means of a weighed average according to the engine angle of the instantaneous intake pressures inside the corresponding investigation window Wa and Wb; in other words, the instantaneous intake pressures measured in some given engine degrees may be considered more significant (i.e. with a higher weight) than other instantaneous intake pressures.

The electronic control unit 14 preferably determines a plurality of balance indexes Ia and Ib in sequence during the subsequent engine cycles and therefore calculates an average (preferably mobile) between the balance indexes Ia and the balance indexes Ib; thereby, the effect of the accidental errors may be reduced by increasing the confidence degree of the balance indexes Ia and Ib.

According to the balance indexes Ia and Ib, the electronic control unit 14 determines the degree of unbalance of the two cylinders 2.

In order to analyze the balance indexes Ia and Ib, during the designing phase a differential reference value $\Delta_{REF}$ is determined. In use, the electronic control unit 14 calculates a comparison value $\Delta$ equal to the difference between the two balance indexes Ia and Ib, and determines the unbalancing degree of the two cylinders 2 according to the difference between the comparison value $\Delta$ and the differential reference value $\Delta_{REF}$.

The differential reference value $\Delta_{REF}$ is experimentally determined by determining the balance indexes Ia and Ib in a perfectly balanced sample engine; in other words, the reference balance indexes $Ia_{REF}$ and $Ib_{REF}$ are determined by carrying out calibration measurements in a perfectly balanced sample engine, and thus the differential reference value $\Delta_{REF}$ is calculated as the difference between the reference balancing values $IaR_{EF}$ and $Ib_{REF}$.

In essence, the following equations are used:

$$\Delta_{REF} = Ia_{REF} - Ib_{REF}$$

$$\Delta = Ia - Ib$$

$$UNBALANCE = \Delta - \Delta_{REF} = (Ib_{REF} - Ib) - (Ia_{REF} - Ia)$$

The electronic control unit 14 establishes the two cylinders 2 being unbalanced when the difference between the comparison value $\Delta$ and the differential reference value $\Delta_{REF}$ is (substantially) not zero (i.e. as absolute value, it is higher than a first threshold value) and establishes that the two cylinders 2 are balanced when the difference between the comparison value $\Delta$ and the differential reference value $\Delta_{REF}$ is (substantially) zero (i.e. the absolute value is lower than the first threshold value).

Once the electronic control unit 14 has established that there is an unbalance between the two cylinders 2, in order to balance the internal combustion engine 1, i.e. to compensate for the unbalance between the two cylinders 2, the electronic control unit 14 requires the bypass valve 10a of the cylinder 2a to be closed when the difference between the comparison value $\Delta$ and the differential reference value $\Delta_{REF}$ is negative, and requires the bypass valve 10b of the cylinder 2b to be opened when the difference between the comparison value $\Delta$ and the differential reference value $\Delta_{REF}$ is positive (or also vice versa according to the conventions used). The electronic control unit 14 preferably establishes the opening degree of the bypass valve 10a and 10b according to the extent of the absolute value of the difference between the comparison value $\Delta$ and the differential reference value $\Delta_{REF}$; for example, if the absolute value of the difference between the comparison value $\Delta$ and the differential reference value $\Delta_{REF}$ is small (i.e. is lower than a second threshold value), then the electronic control unit 14 requires the bypass valve 10a or 10b to be opened by rotating the corresponding adjustment screw 11a or 11b by one fourth of a turn, while if the absolute value of the difference between the comparison

value $\Delta$ and the differential reference value $\Delta_{REF}$ is high (i.e. higher than the second threshold value), then the electronic control unit 14 requires the bypass valve 10a or 10b to be opened by rotating the corresponding adjustment screw 11a or 11b by half a turn.

As previously mentioned, during each engine cycle, the electronic control unit 14 saves the instantaneous intake pressures provided by the pressure sensors 13 (in the embodiment shown in figure 1) or by the pressure sensor 13 (in the embodiment in figure 2) in the fast acquisition buffer; moreover, at the end of each engine cycle occurring in the desired, stabilized engine point, the electronic control unit 14 determines the balance indexes Ia and Ib by calculating an average of the instantaneous intake pressures previously saved in the buffer. Preferably, the sampling frequency of the instantaneous intake pressure is directly proportional to the engine rpm so that a constant number (e.g. 120) of instantaneous intake pressure samples is acquired at each engine cycle.

The above-described mode for balancing the two cylinders 2 is typically performed by the electronic control unit 14 once the internal combustion engine 1 has been constructed, starting from the bypass valves 10 entirely closed. Furthermore, the above-described mode for balancing the two cylinders 2 may be performed by the electronic control unit 14 also during the normal operation of the internal combustion engine 1 (obviously, when possible, i.e. when the current engine point is stabilized and is about the desired engine point), to check whether the two cylinders 2 are actually unbalanced; if the electronic control unit 14 detects an unbalance (e.g. caused by a time drift of the components, by a fault, or by an incorrect maintenance intervention), the electronic control unit 14 indicates the need for servicing to the driver.

The above-described mode for balancing the two cylinders 2 may be performed in any engine having two or more cylinders, in which the butterfly valves of several intake ducts are controlled by a single common actuator. For example, in the case of an engine having four V-arranged cylinders, in which four butterfly valves controlled in pairs by two different electric actuators are provided, the above-described balancing operation is performed for each pair of cylinders, formed by two cylinders which share the same common electric actuator for the butterfly valve of the intake ducts.

The above-described balancing method has several advantages.

Firstly, the above-described balancing method is simple and cost-effective to be implemented, not requiring the addition of new hardware components as compared to those normally present in a modern internal combustion engine of a motorcycle, and not requiring a calculation power higher than the possibility of the electronic control units currently in use.

Furthermore, the above-described balancing method does not require the intervention by a highly specialized operator, because the operator only needs to act on the screws 11 according to the indications received from the electronic control unit 14, and thus has no function to decide but only function to execute.

The above-described balancing method is particularly fast as compared to the traditional completely manual balancing and allows to obtain a high uniformity of results (on the contrary, an even highly specialized operator may produce either a very good or poor balancing according to his/her degree of fatigue/attention, and thus with a high unpredictability and dispersion of results).

The above-described balancing method does not require vacuometers to be used, therefore the balancing procedure is thus simplified and the ports in the intake ducts 3 are no longer needed to be connected to the vacuometers.

Finally, the above-described balancing method may be performed during the normal operation of the internal combustion engine 1, thus allowing a continuous control of the balancing state of the cylinders 2.

**Claims**

1. Balancing method for the cylinders (2) of an internal combustion engine (1); the internal combustion engine (1) comprises at least two cylinders (2), each of which receives fresh air by means of an intake duct (3); the balancing method comprises the steps of:

   determining, during a design phase, a first investigation window (Wa) expressed in engine degrees and associated to a first cylinder (2a);
   determining, during the design phase, a second investigation window (Wb) expressed in engine degrees and associated to a second cylinder (2b);
   sampling, during an engine cycle, the measure of the instantaneous intake pressure provided by at least one pressure sensor (13) coupled to at least one intake duct (3);
   determining a first balance index (Ia) associated to the first cylinder (2a) by calculating an average of the instantaneous intake pressures within the first investigation window (Wa);
   determining a second balance index (Ib) associated to the second cylinder (2b) by calculating an average of the instantaneous intake pressures within the second investigation window (Wb); and

determining the degree of unbalance of the two cylinders (2) according to the balance indexes (Ia, Ib);

the balancing method is **characterized in that** it comprises the further steps of:

determining, during the design phase, a differential reference value ($\Delta_{REF}$) by determining the balance indexes (Ia, Ib) in a sample engine which is perfectly balanced;
calculating a comparison value ($\Delta$) equal to the difference between the two balance indexes (Ia, Ib); and
determining the unbalance degree of the two cylinders (2) according to the difference between the comparison value ($\Delta$) and the differential reference value ($\Delta_{REF}$).

2. Balancing method according to claim 1, wherein:

the internal combustion engine (1) comprises, for each intake duct (3), a corresponding pressure sensor (13) ;
each investigation window (Wa; Wb) coincides with the engine cycle; and
each balance index (Ia; Ib) is determined by calculating the average of the instantaneous intake pressures measured by the pressure sensor (13) coupled to the corresponding cylinder (2a; 2b).

3. Balancing method according to claim 1, wherein:

the internal combustion engine (1) comprises a single pressure sensor (13), which is pneumatically connected to both intake ducts (3) in order to measure a intake pressure value which is a combination of the pressures present inside the intake ducts (3); and
each investigation window (Wa; Wb) covers a fraction of the engine cycle.

4. Balancing method according to claim 3, wherein the two investigation windows (Wa; Wb) do not present any overlap.

5. Balancing method according to one of the claims from 1 to 4 and comprising the further steps of:

establishing that the two cylinders (2) are unbalanced when the difference between the comparison value ($\Delta$) and the differential reference value ($\Delta REF$) is not null; and
establishing that the two cylinders (2) are balanced when the difference between the comparison value ($\Delta$) and the differential reference value ($\Delta REF$) is null.

6. Balancing method according to claim 5, wherein the internal combustion engine (1) comprises at least two bypass ducts (9), each of which is arranged astride of a butterfly valve (7) and is provided with an adjustable bypass valve (10); the balancing method comprises the further steps of:

requiring an opening of a first bypass valve (10a) of the first cylinder (2a) when the difference between the comparison value ($\Delta$) and the differential reference value ($\Delta_{REF}$) is negative; and
requiring an opening of a second bypass valve (10b) of the second cylinder (2b) when the difference between the comparison value ($\Delta$) and the differential reference value ($\Delta_{REF}$) is positive.

7. Balancing method according to claim 6 and comprising the further step of establishing the degree of opening of the bypass valve (10a, 10b) according to the extent of the absolute value of the difference between the comparison value ($\Delta$) and the differential reference value ($\Delta_{REF}$).

8. Balancing method according to one of the claims from 1 to 7 and comprising the further step of making the internal combustion engine (1) run at a desired and stabilized engine point.

9. Balancing method according to claim 8, wherein the desired engine point envisages a rpm range close to the minimum rpm and a reduced degree of opening of the butterfly valves (7).

10. Balancing method according to one of the claims from 1 to 9 and comprising the further steps of:

determining in sequence a plurality of balance indexes (Ia, Ib); and
calculating the average between the first balance indexes (Ia) and the second balance indexes (Ib).

11. Balancing method according to one of the claims from 1 to 10, wherein each balance index (Ia; Ib) is obtained by calculating a weighted average according to the engine angle of the instantaneous intake pressures within the corresponding investigation window (Wa; Wb).

12. Balancing method according to one of the claims from 1 to 11 and comprising the further steps of:

saving, during each engine cycle, the instantaneous intake pressures in a fast acquisition buffer of an electronic control unit (14); and
determining, at the end of each engine cycle, the balance indexes (Ia, Ib) by calculating an average of the instantaneous intake pressures previously saved in the buffer.

13. Balancing method according to one of the claims from 1 to 12, wherein the sampling frequency of the instantaneous intake pressures is directly proportional to the engine rpm, so that a constant number of instantaneous intake pressures is acquired in each engine cycle.

## Patentansprüche

1. Verfahren zum Ausgleichen der Zylinder (2) einer Brennkraftmaschine (1); die Brennkraftmaschine (1) weist mindestens zwei Zylinder (2) auf, von denen jeder durch eine Eintrittsleitung (3) Frischluft aufnimmt; das Ausgleichsverfahren beinhaltet folgende Schritte:

Bestimmen, während einer Ausbildungsphase, eines ersten Untersuchungsfensters (Wa), das als Maschinengrade ausgedrückt und einem ersten Zylinder (2a) zugeordnet ist;
Bestimmen, während der Ausbildungsphase, eines zweiten Untersuchungsfensters (Wb), das als Maschinengrade ausgedrückt und einem zweiten Zylinder (2b) zugeordnet ist;
Abtasten, während eines Maschinenzyklus, des Maßes des augenblicklichen Einlassdrucks, das von mindestens einem an mindestens eine Eintrittsleitung (3) gekoppelten Drucksensor (13) geliefert wird;
Bestimmen eines dem ersten Zylinder (2a) zugeordneten, ersten Ausgleichsindex (Ia) durch Berechnen eines Durchschnitts der augenblicklichen Einlassdrücke innerhalb des ersten Untersuchungsfensters (Wa);
Bestimmen eines dem zweiten Zylinder (2b) zugeordneten, zweiten Ausgleichsindex (Ib) durch Berechnen eines Durchschnitts der augenblicklichen Einlassdrücke innerhalb des zweiten Untersuchungsfensters (Wb); und
Bestimmen des Grades der Ungleichheit der zwei Zylinder (2) abhängig von den Ausgleichsindizes (Ia, Ib);

das Ausgleichsverfahren ist **dadurch gekennzeichnet, dass** es die weiteren Schritte beinhaltet:

Bestimmen, während der Ausbildungsphase, eines differenziellen Referenzwertes ($\Delta_{REF}$) durch Bestimmen der Ausgleichsindizes (Ia, Ib) in einer Mustermaschine, die einwandfrei ausgeglichen ist;
Berechnen eines Vergleichswertes ($\Delta$), der gleich der Differenz zwischen den zwei Ausgleichsindizes (Ia, Ib) ist; und
Bestimmen des Grades der Ungleichheit der zwei Zylinder (2) abhängig von der Differenz zwischen dem Vergleichswert ($\Delta$) und dem differenziellen Referenzwert ($\Delta_{REF}$).

2. Ausgleichsverfahren nach Anspruch 1, wobei:

die Brennkraftmaschine (1) für jede Eintrittsleitung (3) einen entsprechenden Drucksensor (13) aufweist;
jedes Untersuchungsfenster (Wa; Wb) mit dem Maschinenzyklus zusammenfällt; und
jeder Ausgleichsindex (Ia; Ib) durch Berechnen des Durchschnitts der augenblicklichen Einlassdrücke, die von dem an den entsprechenden Zylinder (2a; 2b) gekoppelten Drucksensor (13) gemessen werden, bestimmt wird.

3. Ausgleichsverfahren nach Anspruch 1, wobei:

die Brennkraftmaschine (1) einen einzelnen Drucksensor (13) aufweist, der pneumatisch an beide Eintrittsleitungen (3) gekoppelt ist, um einen Einlassdruckwert, der eine Kombination aus den innerhalb der Eintrittsleitungen (3) anstehenden Drücken ist, zu messen; und
jedes Untersuchungsfenster (Wa; Wb) einen Bruchteil des Maschinenzyklus abdeckt.

4. Ausgleichsverfahren nach Anspruch 3, wobei die zwei Untersuchungsfenster (Wa; Wb) keinerlei Überlappung zeigen.

5. Ausgleichsverfahren nach einem der Ansprüche 1 bis 4 und die weiteren Schritte beinhaltend:

Feststellen, dass die zwei Zylinder (2) unausgeglichen sind, wenn die Differenz zwischen dem Vergleichswert ($\Delta$) und dem differenziellen Referenzwert ($\Delta_{REF}$) nicht Null ist; und
Feststellen, dass die zwei Zylinder (2) ausgeglichen sind, wenn die Differenz zwischen dem Vergleichswert ($\Delta$) und dem differenziellen Referenzwert ($\Delta_{REF}$) Null ist.

6. Ausgleichsverfahren nach Anspruch 5, wobei die Brennkraftmaschine (1) mindestens zwei Bypassleitungen (9) aufweist, von denen jede rittlings über einem Drosselventil (7) angeordnet ist und mit einem einstellbaren Bypassventil (10) versehen ist; das Ausgleichsverfahren beinhaltet die weiteren Schritte:

Anfordern einer Öffnung eines ersten Bypassventils (10a) des ersten Zylinders (2a), wenn die Differenz zwischen dem Vergleichswert ($\Delta$) und dem differenziellen Referenzwert ($\Delta_{REF}$) negativ ist; und
Anfordern einer Öffnung eines zweiten Bypassventils (10b) des zweiten Zylinders (2b), wenn die Differenz zwischen dem Vergleichswert ($\Delta$) und dem differenziellen Referenzwert ($\Delta_{REF}$) positiv ist.

7. Ausgleichsverfahren nach Anspruch 6 und mit dem weiteren Schritt des Feststellens des Grades der Öffnung des Bypassventils (10a, 10b) abhängig vom Maß des absoluten Wertes der Differenz zwischen dem Vergleichswert ($\Delta$) und dem differenziellen Referenzwert ($\Delta_{REF}$).

8. Ausgleichsverfahren nach einem der Ansprüche 1 bis 7 und mit dem weiteren Schritt des Veranlassens der Brennkraftmaschine (1), bei einem gewünschten und stabilisierten Maschinenbetriebspunkt zu laufen.

9. Ausgleichsverfahren nach Anspruch 8, wobei der gewünschte Maschinenbetriebspunkt einen Drehzahlbereich nahe der minimalen Drehzahl und einen reduzierten Grad der Öffnung der Drosselventile (7) vorsieht.

10. Ausgleichsverfahren nach einem der Ansprüche 1 bis 9 und die weiteren Schritte beinhaltend:

Aufeinanderfolgendes Bestimmen einer Vielzahl von Ausgleichsindizes (Ia, Ib); und
Berechnen des Durchschnitts zwischen den ersten Ausgleichsindizes (Ia) und den zweiten Ausgleichsindizes (Ib).

11. Ausgleichsverfahren nach einem der Ansprüche 1 bis 10, wobei jeder Ausgleichsindex (Ia; Ib) durch Berechnen eines gewichteten Durchschnitts abhängig vom Maschinenwinkel der augenblicklichen Einlassdrücke innerhalb des entsprechenden Untersuchungsfensters (Wa; Wb) erhalten wird.

12. Ausgleichsverfahren nach einem der Ansprüche 1 bis 11 und die weiteren Schritte beinhaltend:

Speichern, während jedes Maschinenzyklus, der augenblicklichen Einlassdrücke in einem Schnellerfassungspuffer einer elektronischen Steuereinheit (14); und
Bestimmen, am Ende jedes Maschinenzyklus, der Ausgleichsindizes (Ia, Ib) durch Berechnen eines Durchschnitts der zuvor im Puffer gespeicherten, augenblicklichen Einlassdrücke.

13. Ausgleichsverfahren nach einem der Ansprüche 1 bis 12, wobei die Abtastfrequenz der augenblicklichen Einlassdrücke direkt proportional zur Maschinendrehzahl ist, sodass in jedem Maschinenzyklus eine konstante Zahl augenblicklicher Einlassdrücke erfasst wird.

**Revendications**

1. Procédé d'équilibrage des cylindres (2) d'un moteur à combustion interne (1) ; le moteur à combustion interne (1) comprenant au moins deux cylindres (2), qui reçoivent chacun de l'air frais au moyen d'un conduit d'admission (3) ; le procédé d'équilibrage comprenant les étapes :

de détermination, pendant une phase de conception, d'une première fenêtre d'investigation (Wa) exprimée en degrés de moteur et associée à un premier cylindre (2a) ;

de détermination, pendant la phase de conception, d'une deuxième fenêtre d'investigation (Wb) exprimée en degrés de moteur et associée à un deuxième cylindre (2b) ;

d'échantillonnage, pendant un cycle de moteur, de la mesure de la pression d'admission instantanée fournie par au moins un capteur de pression (13) couplé à au moins un conduit d'admission (3) ;

de détermination d'un premier indice d'équilibre (Ia) associé au premier cylindre (2a) en calculant une moyenne des pressions d'admission instantanées dans la première fenêtre d'investigation (Wa) ;

de détermination d'un deuxième indice d'équilibre (Ib) associé au deuxième cylindre (2b) en calculant une moyenne des pressions d'admission instantanées dans la deuxième fenêtre d'investigation (Wb) ; et

de détermination du degré de déséquilibre des deux cylindres (2) conformément aux indices d'équilibre (Ia, Ib) ;

le procédé d'équilibrage étant **caractérisé en ce qu'**il comprend les étapes supplémentaires :

de détermination, pendant la phase de conception, d'une valeur de référence différentielle ($\Delta_{REF}$) en déterminant les indices d'équilibre (Ia, Ib) dans un moteur échantillon qui est parfaitement équilibré ;

de calcul d'une valeur de comparaison ($\Delta$) égale à la différence entre les deux indices d'équilibre (Ia, Ib) ; et

de détermination du degré de déséquilibre des deux cylindres (2) conformément à la différence entre la valeur de comparaison ($\Delta$) et la valeur de référence différentielle ($\Delta_{REF}$).

2. Procédé d'équilibrage selon la revendication 1, dans lequel :

le moteur à combustion interne (1) comprend, pour chaque conduit d'admission (3), un capteur de pression (13) correspondant ;

chaque fenêtre d'investigation (Wa ; Wb) coïncide avec le cycle de moteur ; et

chaque indice d'équilibre (Ia ; Ib) est déterminé en calculant la moyenne des pressions d'admission instantanées mesurées par le capteur de pression (13) couplé au cylindre (2a ; 2b) correspondant.

3. Procédé d'équilibrage selon la revendication 1, dans lequel :

le moteur à combustion interne (1) comprend un capteur de pression (13) unique, qui est relié pneumatiquement aux deux conduits d'admission (3) afin de mesurer une valeur de pression d'admission qui est une combinaison des pressions présentes à l'intérieur des conduits d'admission (3) ; et

chaque fenêtre d'investigation (Wa ; Wb) couvre une fraction du cycle de moteur.

4. Procédé d'équilibrage selon la revendication 3, dans lequel les deux fenêtres d'investigation (Wa ; Wb) ne présentent aucune superposition.

5. Procédé d'équilibrage selon l'une des revendications 1 à 4 et comprenant les étapes supplémentaires :

d'établissement que les deux cylindres (2) sont déséquilibrés lorsque la différence entre la valeur de comparaison ($\Delta$) et la valeur de référence différentielle ($\Delta_{REF}$) n'est pas nulle ; et

d'établissement que les deux cylindres (2) sont équilibrés lorsque la différence entre la valeur de comparaison ($\Delta$) et la valeur de référence différentielle ($\Delta_{REF}$) est nulle.

6. Procédé d'équilibrage selon la revendication 5, dans lequel le moteur à combustion interne (1) comprend au moins deux conduits de dérivation (9), chacun d'eux étant agencé en dérivation sur une vanne papillon (7) et étant pourvu d'une vanne de dérivation ajustable (10) ; le procédé d'équilibrage comprenant les étapes supplémentaires :

de demande d'une ouverture d'une première vanne de dérivation (10a) du premier cylindre (2a) lorsque la différence entre la valeur de comparaison ($\Delta$) et la valeur de référence différentielle ($\Delta_{REF}$) est négative ; et

de demande d'une ouverture d'une deuxième vanne de dérivation (10b) du deuxième cylindre (2b) lorsque la différence entre la valeur de comparaison ($\Delta$) et la valeur de référence différentielle ($\Delta_{REF}$) est positive.

7. Procédé d'équilibrage selon la revendication 6 et comprenant l'étape supplémentaire d'établissement du degré d'ouverture de la vanne de dérivation (10a, 10b) conformément à l'ampleur de la valeur absolue de la différence entre la valeur de comparaison ($\Delta$) et la valeur de référence différentielle ($\Delta_{REF}$).

8. Procédé d'équilibrage selon l'une des revendications 1 à 7 et comprenant l'étape supplémentaire de mise en fonctionnement du moteur à combustion interne (1) à un point de moteur souhaité et stabilisé.

**9.** Procédé d'équilibrage selon la revendication 8, dans lequel le point de moteur souhaité envisage une plage de nombre de tours par minute proche du nombre de tours par minute minimum et un degré réduit d'ouverture des vannes papillons (7).

**10.** Procédé d'équilibrage selon l'une des revendications 1 à 9 et comprenant les étapes supplémentaires :

de détermination séquentiellement d'une pluralité d'indices d'équilibre (Ia, Ib) ; et
de calcul de la moyenne entre les premiers indices d'équilibre (Ia) et les deuxièmes indices d'équilibre (Ib).

**11.** Procédé d'équilibrage selon l'une des revendications 1 à 10, dans lequel chaque indice d'équilibre (Ia ; Ib) est obtenu en calculant une moyenne pondérée conformément à l'angle de moteur des pressions d'admission instantanées dans la fenêtre d'investigation (Wa ; Wb) correspondante.

**12.** Procédé d'équilibrage selon l'une des revendications 1 à 11 et comprenant les étapes supplémentaires :

de sauvegarde, pendant chaque cycle de moteur, des pressions d'admission instantanées dans une mémoire tampon d'acquisition rapide d'une unité de commande électronique (14) ; et
de détermination, à la fin de chaque cycle de moteur, des indices d'équilibre (Ia, Ib) en calculant une moyenne des pressions d'admission instantanées sauvegardées précédemment dans la mémoire tampon.

**13.** Procédé d'équilibrage selon l'une des revendications 1 à 12, dans lequel la fréquence d'échantillonnage des pressions d'admission instantanées est directement proportionnelle au nombre de tours par minute du moteur, de sorte qu'un nombre constant de pressions d'admission instantanées est acquis dans chaque cycle de moteur.

Fig.1

Fig.2

EP 2 243 942 B1

Fig.3

Fig.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10332350 A1